# EUROPEAN PATENT SPECIFICATION

(11) **EP 4 018 426 B1**
(45) Date of publication and mention of the grant of the patent: **24.12.2025**
(21) Application number: 19758711.6
(22) Date of filing: 22.08.2019
(51) Int. Cl.: G08G 1/16, B60W 30/09, B60W 30/18, B60W 40/04, B62D 15/02, B60Q 1/34, B60Q 1/46, B60Q 1/50

(54) **A METHOD FOR A LANE CHANGE OF A VEHICLE**
VERFAHREN ZUM SPURWECHSEL EINES FAHRZEUGS
PROCÉDÉ DESTINÉ AU CHANGEMENT DE VOIE D'UN VÉHICULE

(43) Date of publication of application: 29.06.2022
(73) Proprietor: VOLVO TRUCK CORPORATION, 405 08 Göteborg (SE)
(72) Inventor: KARLSSON, Henrik, 411 24 Göteborg (SE); LIDMAN OLSSON, Anna, 411 31 Göteborg (SE)
(74) Representative: Kransell & Wennborg KB
(86) International application number: PCT/EP2019/072472
(87) International publication number: WO 2021/032306

(56) References cited:
- EP-A1- 3 333 047
- KR-A- 20140 025 108
- US-A1- 2017 240 096
- US-B1- 10 089 876

## Description

### TECHNICAL FIELD

The invention relates to a method for a lane change of a subject vehicle on a multi-lane road. The invention also relates to a computer program, a computer readable medium, a control unit, and a vehicle.

The invention can be applied in heavy-duty vehicles, such as trucks and buses. Although the invention will be described with respect to trucks, the invention is not restricted to this particular vehicle, but may also be used in other vehicles such as cars.

### BACKGROUND

A vehicle turning signals communicates that a vehicle emitting the signal intends to turn, or change lane on a multi-lane road. There are situations where there is a desire to communicate to other road users and urgency of the vehicle to perform the turn, or lane change.

WO2014009130A1 describes signalling of an emergency stop process of a vehicle, in which a flashing warning light signal is output. The signal for the emergency stop process is different from a signal for an intention to change lanes in a non-emergency situation.

US2017/0240096A1 relates to an intention signaling system for an autonomous vehicle which can monitor sensor information indicating a situational environment of the autonomous vehicle, and detect an external entity based, at least in part, on the sensor data. The intention signaling system can generate an output to signal one of an intent of the autonomous vehicle or an acquiescence of the autonomous vehicle to the external entity. The intention signaling system can generate an audio output to provide a driver of a human-driven vehicle with adequate indication of the autonomous vehicle's intent. If the driver ignores the intention output, then the control system can slow the autonomous vehicle and merge behind the human-driven vehicle. However, if the driver complies with the intention output, then the intention signaling system can generate a courtesy output accordingly to thank the driver for complying.

There is however a desire to further improve the communication between vehicles. For example, with the introduction of autonomous vehicles, and the resulting mix, on a multi-lane road on autonomous, and non-autonomous vehicles, the intentions of autonomous vehicles should be clearly communicated to other vehicles.

### SUMMARY

An object of the invention is to facilitate a lane change maneuver of a vehicle, for example an autonomous vehicle.

The object is reached by a method according to claim 1.

The obstacle may require a lane change of the subject vehicle. The establishment of the obstacle presence may be an identification of a traffic condition which favours a lane change. The lane change may be required within a limited time or distance.

The first signal may communicate that the subject vehicle will need to change lane. Actuating the second signal in dependence on the distance to the obstacle, and/or the time to reach the obstacle, may make the second signal actuation dependent on an urgency of the situation of the subject vehicle. The second signal may indicate to a controller of a vehicle in the second lane the urgency of the situation. The invention is particularly interesting where the subject vehicle is an autonomous vehicle. Where the subject vehicle is a non-autonomous vehicle, a human driver thereof may control the vehicle to be positioned so as to "inch" itself forward to squeeze into the traffic in the second lane. However, this may not be feasible for an autonomous vehicle. The invention is especially interesting where the subject vehicle is an autonomous vehicle, and a vehicle in the second lane is a non-autonomous vehicle. The invention may provide acceptance for autonomous vehicles, and make human drivers understand that these vehicles may need to act assertive, just as humans may need to do, in order to properly function together with non-autonomous vehicles. Nevertheless, the invention is also beneficial where the subject vehicle is a non-autonomous vehicle. For example, second signal actuation according to the invention may be implemented as an automatic function in a non-autonomous vehicle. Thereby, a human driver thereof may be assisted by the function in his/her driving.

The obstacle may be an object in the first lane, a human in the first lane, an end of the first lane, or a separation of the second lane from the first lane. The object may be for example a further vehicle in the first lane, or an animal. In the case of a separation of the second lane from the first lane, the first lane may not lead to a desired destination of the subject vehicle. Embodiments of the invention provides an effective assistance to vehicle encountering such obstacles.

The establishment of the presence of the obstacle in the first lane may be done by a detection by a radar device, a lidar device, and/or a camera, and/or by map data. Thereby, an effective establishment of the presence of the obstacle may be obtained. A Central Management Software (CMS) may be used in conjunction with a plurality of cameras.

According to the invention, the method comprises, subsequently to actuating the second signal, actuating the intended lane change. Thereby, the method comprises actuating, in conjunction with actuating the intended lane change, a third signal, different from the first and second signals, to indicate the intent to change lane to the second lane. Thereby, in addition to an urgency notification of the second signal, the third signal may provide a warning signal that the subject vehicle is actually changing lane. The third signal is actuated when the lane change is actuated. For example, the third signal actuation may be initiated when the lane change is initiated.

The method may comprise determining, prior to the second signal actuation, that one or more further vehicles in the second lane prevent the change of the subject vehicle to the second lane. Such a determination may be a result of monitoring the second lane for a space permitting a lane change. In some embodiments, the determination of the prevention to the change of the subject vehicle to the second lane is a condition for the second signal actuation. Thereby, the use of the second signal may be restricted to situations where a lane change is prevented. Thereby, unnecessary use of the second signal may be avoided. Said condition for the second signal actuation may be provided in addition to the dependence on the distance to the obstacle, or the time to reach the obstacle. However, it should be noted that in some embodiments, the second signal, being dependent on distance or the time to the obstacle, could be used regardless of whether there is one or more further vehicles in the second lane preventing the change of the subject vehicle to the second lane.

The method may comprise determining that the prevention to the change of the subject vehicle to the second lane is no longer present, and subsequently actuating the intended lane change. Thereby, a safe avoidance of the obstacle in the first lane may be obtained.

The method may comprise performing, in dependence on the distance to the obstacle, and/or the time to reach the obstacle, a deceleration of the subject vehicle, a stopping maneuver of the subject vehicle, or a departure of the subject vehicle from the first lane not to the second lane. This may be particularly beneficial where the obstacle in the first lane is an object, or a human. Thereby, a safe avoidance of the obstacle may be obtained, in case the prevention to the change of the subject vehicle to the second lane remains present. The deceleration, the stopping maneuver, or the lane departure may be performed upon establishing that the subject vehicle reaches a threshold distance to the obstacle, or a threshold time to reach the obstacle. In conjunction with the deceleration, the stopping maneuver, or the lane departure, a fourth signal, different from the second signal, may be actuated. Thereby, a communication may be given to other vehicles concerning the deceleration, the stopping maneuver, or the lane departure.

The method may comprise establishing that the obstacle is no longer present in the first lane. For example, where the obstacle is an object, for example a vehicle, or a human, it may move out of the first lane, after the initiation of the second signal actuation, while the subject vehicle remains in the first lane. Thereby, it may be determined to terminate the second signal actuation, and remain in the first lane. Thereby, an unnecessary lane change may be avoided.

The disclosure also relates to a method, not part of the invention, for a lane change of a subject vehicle on a multi-lane road, the method comprising
- controlling the subject vehicle to travel in a first lane,
- actuating a first signal, detectable by a controller of a vehicle in a second lane adjacent to the first lane, and indicative of an intent of the subject vehicle to change lane to the second lane,
- determining that one or more further vehicles in the second lane prevent the change of the subject vehicle to the second lane,
- subsequently to the first signal actuation, actuating, in dependence on the determination that one or more further vehicles in the second lane prevent the change of the subject vehicle to the second lane, a second signal, different from the first signal, detectable by a controller of a vehicle in the second lane, and indicative of the intent of the subject vehicle to change lane to the second lane,
- subsequently to actuating the second signal, controlling the subject vehicle to travel in a first lane while maintaining the second signal actuation,
- subsequently determining that the prevention of the lane change of the subject vehicle, to the second lane, is no longer present, and
- actuating the intended lane change in dependence on the determination that the prevention of the lane change of the subject vehicle, to the second lane, is no longer present.

The second signal could be actuated, in dependence on the determination that one or more further vehicles in the second lane prevent the change of the subject vehicle to the second lane, where there is an obstacle in the first lane. However, in some embodiments, the second signal could be actuated where there is no obstacle in the first lane. For example, the second signal could be actuated where a human driver wants to change lane for some other reason.

The second signal, actuated in dependence on the determination that one or more further vehicles in the second lane prevent the change of the subject vehicle to the second lane, is particularly interesting where the subject vehicle is an autonomous vehicle, and a vehicle in the second lane is a non-autonomous vehicle. Such a second signal may provide acceptance for autonomous vehicles, and make human drivers understand that these vehicles may need to act assertive. Thereby, a lane change maneuver of the subject vehicle is facilitated. The intended lane change may be actuated if the prevention of the lane change of the subject vehicle, to the second lane, is no longer present.

As suggested, the controller of the vehicle in the second lane may be a human driver. As also suggested, the invention may thereby provide a better acceptance by human drivers for autonomous vehicles. However, in some embodiments, the controller of the vehicle in the second lane may be a computer of the vehicle in the second lane, arranged to receive signals from a sensor adapted to detect the second signal.

The first and second signals may be light signals. More specifically, the first and second signals may be flashing light signals detectable by a controller of a vehicle in the second lane. Thereby, the signals may be easily detectable where the controller is a human driver. The first and second signals may form turn signals. The first and second signal may differ by presenting different flash sequences.

The second signal may have a higher flash frequency, a higher intensity, and/or a different sequence, than the first signal. Thereby, an effective communication of the intention of the subject vehicle may be provided.

In some embodiments, a change from the lower frequency and/or intensity of the first signal, to the higher frequency and/or intensity of the second signal, is gradual. There might be a gradual increase of the frequency and/or the intensity of the flashing light in dependence on the distance to the obstacle, and/or the time to reach the obstacle Thereby, the communication of the urgency of the lane change may be more nuanced. For example, the receiver of the signals may be made aware of the gradual approach of the subject vehicle to an obstacle in the first lane. However, it should be noted that in some embodiments, the change from the first signal to the second signal may be provided as a step.

It should be noted that is some embodiments, one, or both, of the first and second signals may be non-flashing light signals.

In some embodiments, where the first and second signals are light signals, and the first and second signals have different colors. For example, the first signal may of a color traditionally use for turning signaling, e.g. amber. Alternatively, the first signal may be of some other color, e.g. yellow. The second signal may have a brighter color, or a darker color, than the first signal. The second signal may be e.g. white, or red.

By the difference between the signals, additional information may be communicated to other road users, such as an urgency to change lane. Thereby, an autonomous vehicle can use the second signal in a situations where it needs to act assertive to avoid a potential dangerous situation. To gain more acceptance of autonomous vehicles in the society, this additional communication can help other road users to better understand the intention of the vehicle. By communicating more information to other road users and making them aware of potentially urgent situations, embodiments of the invention can help to increase safety in mixed traffic environments. For example, without the second signal, and with the knowledge of a driver of a vehicle in the second lane, that the subject vehicle is autonomous, the driver could take advantage of a situation, and, for example, hinder the autonomous vehicle to perform its intended action. The second signal may communicate an urgency and/or an upcoming assertive behavior, and thereby increase safety and reduce the risk of an accident.

It should be noted that there may be different ways to provide the second signal. In some embodiments, the first and/or the second signal may be a signal send via vehicle-to-vehicle (V2V) communication. This may be useful, e.g. in a case where the subject vehicle, as well as a vehicle in the second lane, are autonomous vehicles.

Preferably, the subject vehicle is an autonomous vehicle, and the steps the method are performed by a processing circuitry of a computer in the subject vehicle. As suggested, embodiments of the invention may be particularly useful when provided for an autonomous vehicle. However, as also suggested, the subject vehicle may be a non-autonomous vehicle, with a human driver. For example, the subject vehicle may have the first signal activated, and be about to change lane, when a vehicle in the second lane enters a space in the second lane, which the subject vehicle intends to use. Thereby, the second signal could be used to better attract the attention of a driver in the other vehicle.

The object is also reached with a computer program according to claim 9, a computer readable medium according to claim 10, a control unit according to claim 11, or a vehicle according to claim 12.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a side view of a vehicle in the form of a truck.
Fig. 2 is a diagram depicting steps in a method for a lane change of the vehicle in fig. 1, according to an embodiment of the invention.
Fig. 3 is a top view of a part of a multi-lane road, in which the method in fig. 2 is performed.
Fig. 4 is a diagram depicting signals from a turning indicator of the vehicle, in the method in fig. 2,
Fig. 5 is a diagram depicting steps in a method for a lane change of the vehicle in fig. 1, according to another embodiment of the invention.
Fig. 6 is a top view of a part of a multi-lane road, in which the method in fig. 5 is performed.
Fig. 7 is a diagram depicting steps in a method for a lane change, according to a more general embodiment of the invention.

### DETAILED DESCRIPTION OF EXAMPLE EMBODIMENTS OF THE INVENTION

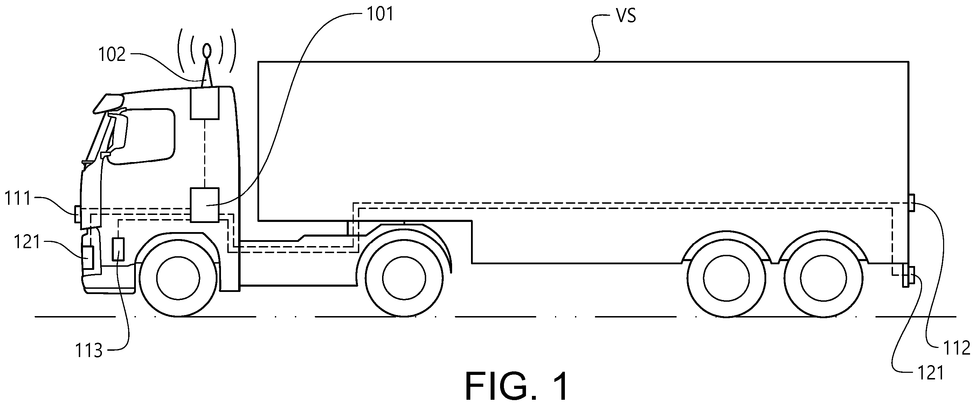

Fig. 1 shows a vehicle VS in the form of a truck with a semitrailer. In the description of this embodiment, the vehicle is also referred to as a subject vehicle. It should be noted that the invention is equally applicable to other types of vehicles, such as cars, buses and dump trucks.

The vehicle in fig. 1 is in this example autonomous, i.e. a self-driving vehicle. Thus, the vehicle is capable of sensing its environment and moving safely with no human input. The vehicle comprises a control unit 101. The control unit comprises a computer with a processing circuitry. The control unit is arranged to receive signals from a variety of sensors to perceive the surroundings of the vehicle. The sensors may include one or more radar sensors, one or more lidar sensors, and/or one or more cameras.

In this example, the vehicle comprises a first sensor 111 arranged to detect objects in a region in front of the vehicle. The vehicle further comprises a second sensor 112 arranged to detect objects in a region behind the vehicle. The vehicle also comprises a third sensor 113 arranged to detect objects in a region laterally of the vehicle, more specifically to the left as seen in the direction of forward travelling of the vehicle. The third sensor could for example detect objects in a lane which is adjacent to the lane in which the vehicle is travelling. In addition, the vehicle further comprises a fourth sensor (not shown) arranged to detect objects in a region laterally of the vehicle, more specifically to the right as seen in the direction of forward travelling of the vehicle.

Any of the sensors 111, 112, 113 could be a radar sensor, a lidar sensor, a camera, or any combination of these. For example, any of the sensors could be a radar sensor and a LIDAR sensor, a radar sensor and a camera, or a LIDAR sensor and a camera. The vehicle control unit 101 is arranged to receive signals from the sensors 111, 112, 113.

The region, in which the first sensor 111 is arranged to detect objects, includes a part of a lane in which the vehicle is travelling. Said region may also include parts of areas outside of the lane in which the vehicle is travelling. The region in which obstacles can be detected by the first sensor 111 may include a part of a shoulder of the road on which the vehicle is travelling. Said region may include a part of a lane which is adjacent to the lane in which the vehicle VS is travelling. Such obstacles may be non-moving in relation to the road, or they may be moving. Also, by means of the first sensor 111, the distance to, velocity of and acceleration of a vehicle in front of the vehicle VS may be determined.

The third sensor 113 and the fourth sensor may be useful to detect vehicles moving faster than the vehicle VS, and driving in the same direction, in another lane, or on a motorway on-ramp.

The control unit 101 is further arranged to determine the position of the vehicle VS, by means of positioning means, such as a GPS (Global Positioning System) device, odometry, and/or one or more inertial measurement units (not shown). The control unit is arranged to interpret signals from the sensors and positioning means, to identify obstacles, signs, and appropriate navigation paths. The control unit is further arranged to control a control system of the vehicle. The vehicle control system is arranged to control a drivetrain of the vehicle, brakes of the vehicle, and a steering function of the vehicle.

However, it should be noted that the invention is applicable also to a vehicle driven by a human driver.

The vehicle VS further comprises a plurality of turning indicators 121, arranged to emit flashing light signals detectable by a controller of another vehicle. The controller may be a human driver. Alternatively, the controller may be a control unit of a further autonomous vehicle, which is arranged to detect the signals by means of a sensor, e.g. a camera. The turning indicators 121 may indicate an intention of the vehicle to perform a sideways maneuver, such as a turn, or a lane change. One or more of the turning indicators 121 may be arranged to indicate an intention of the vehicle to move to the left, relative to the direction of forward travel. Such a turning indicator may be located on a left side of the vehicle. One or more further of the turning indicators 121 may be arranged to indicate an intention of the vehicle to move to the right, relative to the direction of forward travel. Such a turning indicator may be located on a right side of the vehicle.

The vehicle VS may further comprise means 102 for so called Vehicle-to-Vehicle (V2V) communication. The V2V communication means may include an antenna, a radio transmitter, and a radio receiver for wireless communication. A data communication processing device may be arranged to communicate with the control unit 101. The wireless communication could be based on any suitable industry standard format, such as WiFi, radio modem, or Zigbee. This wireless communication could alternatively be based on a non- industry-standard format.

In some embodiments, signals, indicative of an intent of the vehicle VS to change lane, may be sent by means of the V2V communication means, so as to be detectable by a controller of another vehicle, with V2V communication means.

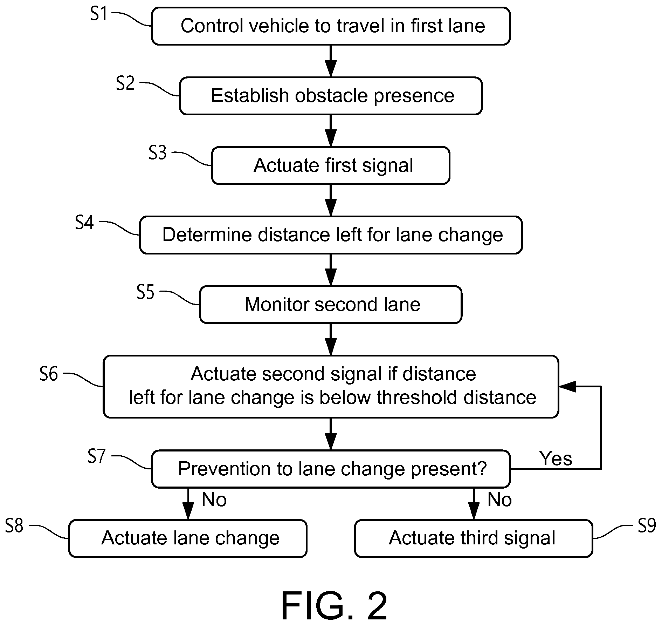

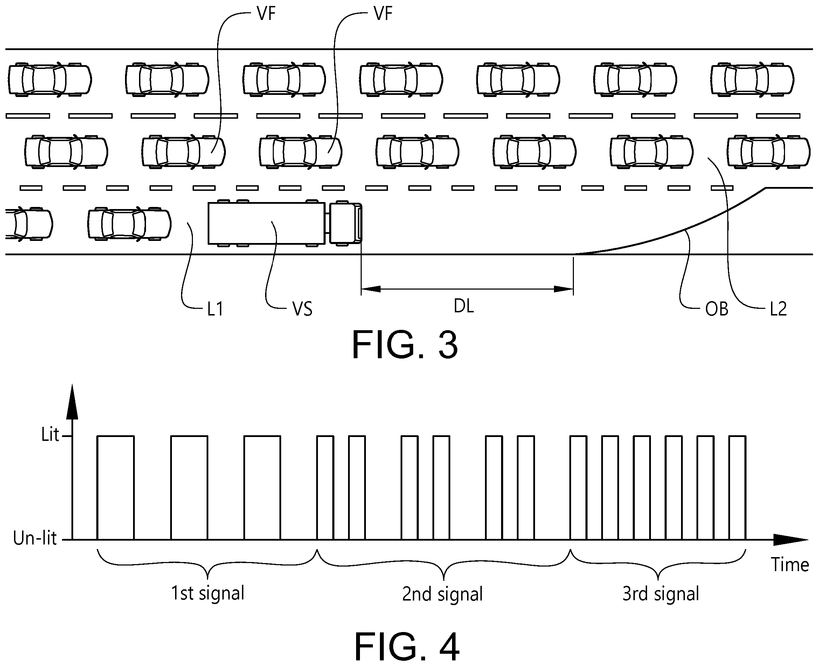

Reference is made to fig. 2 depicting steps in a method for a lane change of the subject vehicle VS on a multi-lane road, according to an embodiment of the invention. Reference is also made to fig. 3 depicting a traffic situation in which the method is used.

The method comprises controlling S1 the subject vehicle VS to travel in a first lane L1. The presence of an obstacle OB in the first lane L1 is established S2. The establishment is made while the vehicle is moving. The obstacle is in front of the vehicle in the direction of travel. In this example, the obstacle OB is an end of the first lane. The obstacle OB is detected by means of the positioning means. More specifically, the obstacle is detected by means of the GPS device providing the position of the vehicle VS, and map data providing the position of the end OB of the first lane L1.

In other examples, the obstacle may be an object, for example a further vehicle, in the first lane, or a human in the first lane. The object may be static, or it may be moving. For example, the object may be a vehicle travelling in the first lane L1, but at a considerably lower speed than the subject vehicle VS. The establishment of the presence of the object in the first lane may be done by a detection by the first sensor 111.

Upon establishing the presence of the obstacle OB, it is determined that a lane change is required. Thus, the obstacle forms a traffic condition which favours a lane change. It is also determined that the lane change should be from the first lane L1 to a second lane L2, adjacent to the first lane. In this example, the second lane is to the left of the first lane, as seen in the direction of forward travelling of the vehicle.

The method comprises actuating S3, in dependence on the obstacle presence establishment, a first signal, detectable by a controller of a vehicle in the second lane. The first signal is indicative of an intent of the subject vehicle to change lane to the second lane. The first signal is a flashing light signal from the turning indicators 121 (fig. 1) on the left side of the vehicle. Thereby, the vehicle communicates a desire to change lane to the second lane L2.

It is further determined that the lane change is required within a certain time or distance. The method comprises determining S4 a distance DL in front of the vehicle, within which the lane change needs to be effected. The distance DL may be a distance between the vehicle VS and the obstacle OB. Alternatively, the distance DL may be a shorter distance, to allow a maneuver of the vehicle VS past the obstacle OB. Alternatively, the method may comprise determining a time interval within which the lane change needs to be effected. As the vehicle VS moves along the first lane L1, the distance, or time interval, within which the lane change needs to be effected, is updated. The distance, or time interval, within which the lane change needs to be effected, may be determined by means of the positioning means, map data, and information about speed of the vehicle VS.

The method comprises monitoring S5 the second lane L2 for a space permitting a lane change. The monitoring is done by means of the third sensor 113 (fig. 1). The third sensor 113 is arranged to detect vehicles in the second lane L2. In this example, it is determined that one or more further vehicles VF in the second lane L2 prevent the change of the subject vehicle VS to the second lane. The situation depicted in fig. 3 could be a traffic jam on a multi-lane highway. The first lane L1 could be an end portion of an entry ramp of the highway. Possibly, the further vehicles VF are not letting the subject vehicle VS change lane.

Reference is made also to fig. 4. In dependence on the distance DL to the obstacle OB, and/or the time to reach the obstacle, a second signal is actuated S6. The second signal is, as the first signal, detectable by a controller of a vehicle in the second lane L2, and indicative of an intent of the subject vehicle to change lane to the second lane. Further, as the first signal, the second signal is a flashing light signal from the turning indicators 121 (fig. 1) on the left side of the vehicle. However, the second signal is different from the first signal. In this example, the second signal has a higher flashing frequency than the first signal. Further, the second signal has a sequence which is different from that of the first signal. More specifically, in the second signal, every other time interval of the turning indicators 121 being un-lit, is longer than the remaining time intervals of the turning indicators 121 being un-lit, whereas the first signal has constant time intervals of the turning indicators 121 being unlit.

Alternatively, or in addition, the second signal may differ from the first signal by having a higher light intensity. In further embodiments, a change from the lower frequency and/or intensity of the first signal, to the higher frequency and/or intensity of the second signal, is gradual. A gradual increase of the frequency and/or the intensity of the flashing light may be provided in dependence on the distance to the obstacle, and/or the time to reach the obstacle.

In this example, the second signal is actuated if the distance DL to the obstacle OB, and/or the time to reach the obstacle, is below a threshold distance, or a threshold time interval, respectively. Thereby, the second signal indicates an urgency of the situation of the subject vehicle VS.

Where the further vehicle VF in the second lane is an autonomous vehicle, the controller in the further vehicle may be in the form of a control unit, which detects the second signal based on data from a sensor of the further vehicle VF, e.g. a camera. In some embodiments, the second signal may be sent from the subject vehicle VS to the further vehicle by V2V communication.

In some embodiments, a determination of a prevention of the lane change, by one or more further vehicles in the second lane, is a condition for the second signal actuation. In such embodiments, the second signal is not actuated if there is no determination of a prevention of the lane change, even if the distance DL to the obstacle OB, and/or the time to reach the obstacle, is below the threshold distance, or the threshold time interval, respectively. Thus, the prevention of the lane change may be a condition for actuating the second signal, in addition to the dependence on the distance to the obstacle, or the time to reach the obstacle.

In other embodiments, the second signal is actuated if the distance DL to the obstacle OB, and/or the time to reach the obstacle, is below the threshold distance, or the threshold time interval, respectively, regardless whether there is a determination of a prevention of the lane change. For example, where the latter is a non-autonomous vehicle, the second signal may be actuated merely because a human driver of the subject vehicle, for some reason waits with the lane change until the vehicle is relatively near the obstacle.

The method may comprise determining S7 that the prevention to the change of the subject vehicle to the second lane is no longer present, and subsequently actuating S8 the intended lane change.

As indicated in fig. 4, the method in this example comprises actuating S9, in conjunction with actuating the intended lane change, a third signal. For example, the third signal may be actuated upon the subject vehicle VS being steered towards the second lane L2.

The third signal is, as the first and second signals, detectable by a controller of a vehicle in the second lane L2, and indicative of an intent of the subject vehicle to change lane to the second lane. Further, as the first and second signals, the third signal is a flashing light signal from the turning indicators 121 (fig. 1) on the left side of the vehicle. However, the third signal is different from the first and second signals. In this example, the third signal has a higher flashing frequency than the first and second signals. Further, the third signal has a sequence which is different from that of the second signal. More specifically, the third signal has constant time intervals of the turning indicators 121 being unlit.

Alternatively, or in addition, the third signal may differ from the second signal by having a higher light intensity. In further embodiments, a change from the lower frequency and/or intensity of the second signal, to the higher frequency and/or intensity of the third signal, is gradual.

Thus, in this embodiment, the turn signal is changed in dependence on the position of the vehicle VS with respect to the obstacle OB, and other vehicles VF. The second signal may be actuated to indicate that the need for the subject vehicle VS to change lane is urgent. When there's sufficient space for the vehicle to initiate the lane change.

Some embodiments may comprise performing in dependence on the distance DL to the obstacle OB, and/or the time to reach the obstacle, a stopping maneuver of the subject vehicle VS. The method may further comprise a departure of the subject vehicle from the first lane L1, but not to the second lane L2. For example, the vehicle VS may enter a road shoulder adjacent to the first lane.

It is further possible, e.g. where the obstacle is an object, that the object ceases to be an obstacle, e.g. by moving out of the first lane L1. This may occur before the subject vehicle has changed lane to the second lane L2. Thereby, the method may comprise establishing that the obstacle is no longer present in the first lane. Upon such an establishment, it may be determined that the vehicle aborts the lane change intent. Thereby, the second signal, if activated, may be terminated.

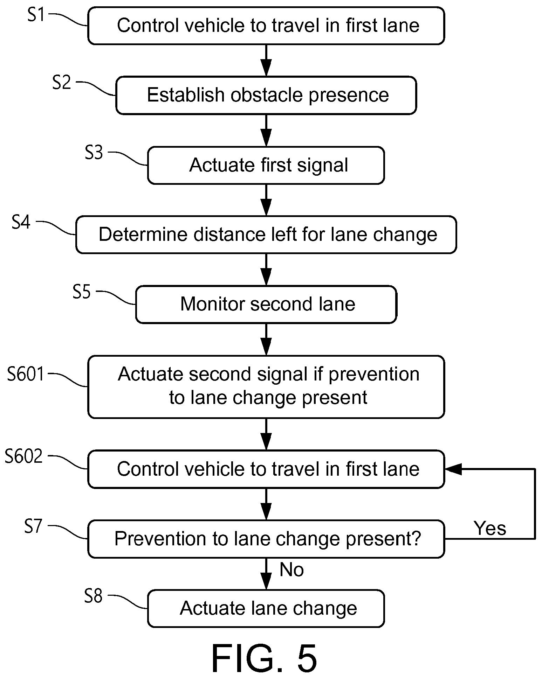

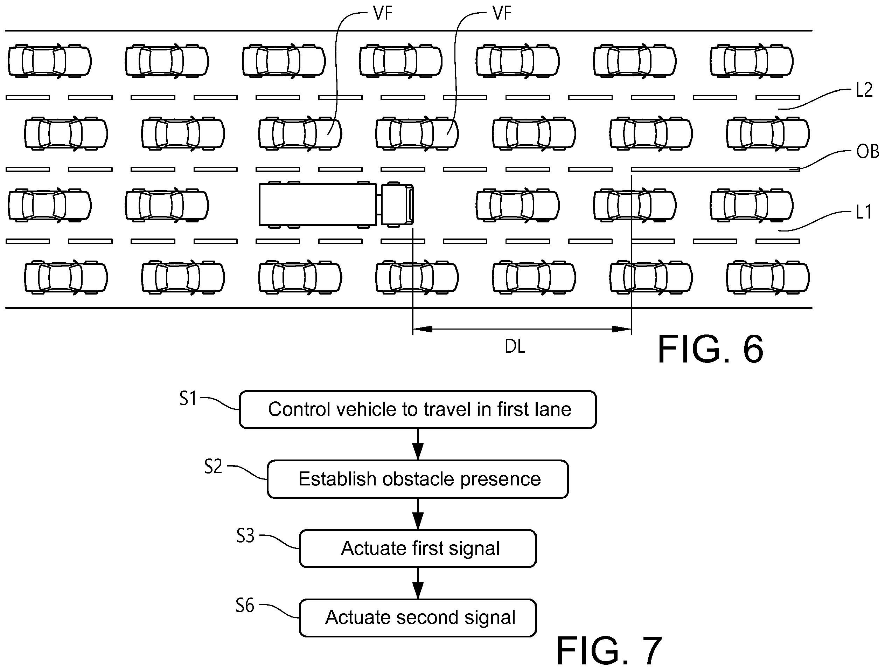

Reference is made to fig. 5 and fig. 6, for a description of a method according to an alternative embodiment of the invention.

The method comprises controlling S1 the subject vehicle VS to travel in a first lane L1. The presence of an obstacle OB in the first lane L1 is established S2. In this example, the obstacle OB is a separation of the first lane from a second lane L2 adjacent to the first lane. For example, the first and second lanes may lead is separate directions. The second lane, but not the first lane, may lead to a desired destination of the subject vehicle.

The obstacle OB may be detected by means of the positioning means, the GPS device, and map data.

Upon establishing the presence of the obstacle OB, it is determined that a lane change, to the second lane L2, is required. In this example, the second lane is to the left of the first lane, as seen in the direction of forward travelling of the vehicle.

The method comprises actuating S3 a first signal, detectable by a controller of a vehicle in the second lane. The first signal is indicative of an intent of the subject vehicle to change lane to the second lane. The first signal is a flashing light signal from the turning indicators 121 (fig. 1) on the left side of the vehicle.

The method may further comprise determining S4 a distance DL in front of the vehicle, within which the lane change needs to be effected.

The method comprises monitoring S5 the second lane L2 for a space permitting a lane change. The monitoring is done by means of the third sensor 113 (fig. 1). In this example, it is determined that one or more further vehicles VF in the second lane L2 prevent the change of the subject vehicle VS to the second lane.

In dependence on the determination that one or more further vehicles in the second lane prevent the change of the subject vehicle to the second lane, a second signal is actuated S601. The second signal is, as the first signal, detectable by a controller of a vehicle in the second lane L2, and indicative of an intent of the subject vehicle to change lane to the second lane. The second signal may differ from the first signal, e.g. as described above with reference to fig. 4.

The method further comprises, subsequently to actuating the second signal, controlling S602 the subject vehicle to travel in the first lane (L1) while maintaining the second signal actuation.

The method may comprise determining S7 that the prevention to the change of the subject vehicle to the second lane is no longer present. Thereupon, the intended lane change may be actuated S8, in dependence on the determination that the prevention of the lane change of the subject vehicle, to the second lane, is no longer present.

Fig. 7 depicts steps in a method, according to a more general embodiment of the invention, for a lane change of a subject vehicle on a multi-lane road. The method comprises controlling S1 the subject vehicle to travel in a first lane, and establishing S2 the presence of an obstacle in the first lane. The method further comprises actuating S3, in dependence on the obstacle presence establishment, a first signal, detectable by a controller of a vehicle in a second lane adjacent to the first lane, and indicative of an intent of the subject vehicle to change lane to the second lane. The method further comprises, subsequently to the first signal actuation, actuating S6, in dependence on the distance to the obstacle, and/or the time to reach the obstacle, a second signal, different from the first signal, detectable by a controller of a vehicle in the second lane, and indicative of the intent of the subject vehicle to change lane to the second lane.

It is to be understood that the present invention is not limited to the embodiments described above and illustrated in the drawings; rather, the skilled person will recognize that many changes and modifications may be made within the scope of the appended claims.

## Claims

1. A method for a lane change of a subject vehicle (VS) on a multi-lane road, wherein the subject vehicle (VS) is an autonomous vehicle, and the steps of the method are performed by a processing circuitry of a computer in the subject vehicle (VS), the method comprising
- controlling (S1) the subject vehicle (VS) to travel in a first lane (L1),
- establishing (S2) the presence of an obstacle (OB) in the first lane (L1), and
- actuating (S3), in dependence on the obstacle presence establishment, a first signal, detectable by a controller of a vehicle in a second lane (L2) adjacent to the first lane (L1), and indicative of an intent of the subject vehicle (VS) to change lane to the second lane (L2),
- , subsequently to the first signal actuation, actuating (S6), in dependence on the distance to the obstacle, and/or the time to reach the obstacle, a second signal, different from the first signal, detectable by a controller of a vehicle in the second lane (L2), and indicative of the intent of the subject vehicle (VS) to change lane to the second lane (L2),
- subsequently to actuating the second signal, actuating (S8) the intended lane change, **characterized by**,
- actuating (S9), in conjunction with actuating the intended lane change, a third signal, different from the first and second signals, detectable by a controller of a vehicle in the second lane (L2), and indicative of the intent of the subject vehicle (VS) to change lane to the second lane (L2), wherein the third signal is actuated when the lane change is actuated.

2. A method according to any one of the preceding claims, **characterized by** determining, prior to the second signal actuation, that one or more further vehicles in the second lane (L2) prevent the change of the subject vehicle to the second lane (L2).

3. A method according to claim 2, **characterized in that** the determination of the prevention of the lane change of the subject vehicle (VS), to the second lane (L2), is a condition for the second signal actuation.

4. A method according to any one of claims 2-3, **characterized by** determining that the prevention of the lane change of the subject vehicle, to the second lane, is no longer present, and subsequently actuating the intended lane change.

5. A method according to any one of the preceding claims, **characterized in that** the first and second signals are flashing light signals.

6. A method according to claim 5, **characterized in that** the second signal has a higher flash frequency, a higher intensity, and/or a different sequence, than the first signal.

7. A method according to claim 6, **characterized in that** a change from a lower frequency and/or intensity of the first signal, to a higher frequency and/or intensity of the second signal, is gradual.

8. A method according to any one of claims 5-7, **characterized by** a gradual increase of the frequency and/or the intensity of the flashing light in dependence on the distance to the obstacle (OB), and/or the time to reach the obstacle (OB).

9. A computer program comprising program code means for performing the steps of any of claims 1-8 when said program is run on a computer.

10. A computer readable medium carrying a computer program comprising program code means for performing the steps of any of claims 1-8 when said program product is run on a computer.

11. A control unit (101) configured to perform the steps of the method according to any of claims 1-8.

12. A vehicle (VS) comprising a control unit (101) according to claim 11.

## Patentansprüche

1. Verfahren zum Spurwechsel eines Testfahrzeugs (VS) auf einer mehrspurigen Straße, wobei das Testfahrzeug (VS) ein autonomes Fahrzeug ist und die Schritte des Verfahrens von einem Verarbeitungsschaltung eines Computers in dem Testfahrzeug (VS) durchgeführt werden, das Verfahren umfassend
- Steuern (S1) des Testfahrzeugs (VS), damit es auf einer ersten Spur (L1) fährt,
- Feststellen (S2) des Vorhandenseins eines Hindernisses (OB) auf der ersten Fahrspur (L1), und
- Betätigen (S3) eines ersten Signals in Abhängigkeit von der Feststellung des Vorhandenseins eines Hindernisses, das von einer Steuerung eines Fahrzeugs auf einer zweiten Spur (L2), die an die erste Spur (L1) angrenzt, erfasst werden kann und eine Absicht des Testfahrzeugs (VS) anzeigt, die Spur auf die zweite Spur (L2) zu wechseln,
- im Anschluss an die erste Signalbetätigung in Abhängigkeit von der Entfernung zu dem Hindernis und/oder der Zeit bis zum Erreichen des Hindernisses, Betätigen (S6) eines zweiten Signals, das sich von dem ersten Signal unterscheidet, das von einer Steuerung eines Fahrzeugs auf der zweiten Spur (L2) erfasst werden kann und die Absicht des Testfahrzeugs (VS) anzeigt, die Spur auf die zweite Spur (L2) zu wechseln,
- im Anschluss an die zweite Signalbetätigung, Betätigen (S8) des beabsichtigten Fahrspurwechsels, **gekennzeichnet durch**,
- Betätigen (S9), in Verbindung mit dem Betätigen des beabsichtigten Spurwechsels, eines dritten Signals, das sich von den ersten und zweiten Signalen unterscheidet, das von einer Steuerung eines Fahrzeugs in der zweiten Spur (L2) erfasst werden kann und die Absicht des Testfahrzeugs (VS) anzeigt, die Spur zur zweiten Spur (L2) zu wechseln, wobei das dritte Signal betätigt wird, wenn der Spurwechsel durchgeführt wird.

2. Verfahren nach einem der vorhergehenden Ansprüche, **dadurch gekennzeichnet, dass** vor der zweiten Signalbetätigung festgestellt wird, dass ein oder mehrere weitere Fahrzeuge auf der zweiten Spur (L2) den Wechsel des Testfahrzeugs auf die zweite Spur (L2) verhindern.

3. Verfahren nach Anspruch 2, **dadurch gekennzeichnet, dass** das Bestimmen der Verhinderung des Spurwechsels des Testfahrzeugs (VS) auf die zweite Fahrspur (L2) eine Bedingung für die zweite Signalbetätigung ist.

4. Verfahren nach einem der Ansprüche 2-3, **dadurch gekennzeichnet, dass** festgestellt wird, dass die Verhinderung des Spurwechsels des betreffenden Fahrzeugs auf die zweite Spur nicht mehr vorliegt, und anschließend der beabsichtigte Spurwechsel durchgeführt wird.

5. Verfahren nach einem der vorhergehenden Ansprüche, **dadurch gekennzeichnet, dass** das erste und das zweite Signal Blinklichtsignale sind.

6. Verfahren nach Anspruch 5, **dadurch gekennzeichnet, dass** das zweite Signal eine höhere Blinkfrequenz, eine höhere Intensität und/oder eine andere Sequenz aufweist als das erste Signal.

7. Verfahren nach Anspruch 6, **dadurch gekennzeichnet, dass** ein Wechsel von einer niedrigeren Frequenz und/oder Intensität des ersten Signals zu einer höheren Frequenz und/oder Intensität des zweiten Signals allmählich erfolgt.

8. Verfahren nach einem der Ansprüche 5-7, **gekennzeichnet durch** eine allmähliche Erhöhung der Frequenz und/oder der Intensität des Blinklichts in Abhängigkeit von der Entfernung zum Hindernis (OB) und/oder der Zeit zum Erreichen des Hindernisses (OB).

9. Computerprogramm, das Programmcodemittel zum Durchführen der Schritte nach einem der Ansprüche 1-8 umfasst, wenn das Programm auf einem Computer ausgeführt wird.

10. Computerlesbares Medium mit einem Computerprogramm, das Programmcodemittel zum Durchführen der Schritte nach einem der Ansprüche 1-8 umfasst, wenn das Programmprodukt auf einem Computer ausgeführt wird.

11. Steuereinheit (101), die konfiguriert ist, um die Schritte des Verfahrens nach einem der Ansprüche 1-8 durchzuführen.

12. Fahrzeug (VS), das eine Steuereinheit (101) nach Anspruch 11 umfasst.

## Revendications

1. Procédé destiné au changement de voie d'un véhicule sujet (VS) sur une route à voies multiples, le véhicule sujet (VS) étant un véhicule autonome, et les étapes du procédé étant réalisées par un circuit de traitement d'un ordinateur dans le véhicule sujet (VS), le procédé comprenant
- la commande (S1) du véhicule sujet (VS) pour qu'il se déplace dans une première voie (L1),
- l'établissement (S2) de la présence d'un obstacle (OB) dans la première voie (L1), et
- l'activation (S3), en fonction de l'établissement de la présence d'un obstacle, d'un premier signal, détectable par un organe de commande d'un véhicule, dans une seconde voie (L2) adjacente à la première voie (LI), et indiquant l'intention du véhicule sujet (VS) de passer dans la seconde voie (L2),
- après la première activation de signal, l'activation (S6), en fonction de la distance jusqu'à l'obstacle et/ou du temps nécessaire pour atteindre l'obstacle, d'un deuxième signal différent du premier signal, détectable par un organe de commande d'un véhicule dans la seconde voie (L2), et indiquant l'intention du véhicule sujet (VS) de passer dans la seconde voie (L2),
- après l'activation du deuxième signal, l'activation (S8) du changement de voie envisagé, **caractérisé par**
- l'activation (S9), en conjonction avec l'activation du changement de voie envisagé, d'un troisième signal différent des premier et second signaux, détectable par un organe de commande d'un véhicule dans la seconde voie (L2), et indiquant l'intention du véhicule sujet (VS) de passer dans la seconde voie (L2), le troisième signal étant activé lorsque le changement de voie est activé.

2. Procédé selon l'une quelconque des revendications précédentes, **caractérisé par** la détermination, avant l'activation du second signal, qu'un ou plusieurs autres véhicules situés dans la seconde voie (L2) empêchent le passage du véhicule sujet dans la seconde voie (L2).

3. Procédé selon la revendication 2, **caractérisé en ce que** la détermination de l'empêchement du passage du véhicule sujet (VS) dans la seconde voie (L2) est une condition de l'activation du second signal.

4. Procédé selon l'une quelconque des revendications 2 à 3, **caractérisé par** la détermination que le passage du véhicule sujet dans la seconde voie n'est plus présent et ensuite l'activation du changement de voie envisagé.

5. Procédé selon l'une quelconque des revendications précédentes, **caractérisé en ce que** les premier et second signaux sont des signaux lumineux clignotants.

6. Procédé selon la revendication 5, **caractérisé en ce que** le second signal a une fréquence de clignotement plus élevée, une intensité plus élevée et/ou une séquence différente de celles du premier signal.

7. Procédé selon la revendication 6, **caractérisé en ce qu'**un passage d'une faible fréquence et/ou intensité du premier signal à une fréquence et/ou intensité plus élevées du second signal est graduelle.

8. Procédé selon l'une quelconque des revendications 5 à 7, **caractérisé par** une augmentation graduelle de la fréquence et/ou de l'intensité du voyant clignotant en fonction de la distance jusqu'à l'obstacle (OB) et/ou du temps nécessaire pour atteindre l'obstacle (OB).

9. Programme informatique comprenant un moyen de code de programme pour réaliser les étapes selon l'une quelconque des revendications 1 à 8 lorsque ledit programme est exécuté sur un ordinateur.

10. Support lisible sur ordinateur comportant un programme informatique comprenant un moyen de code de programme pour réaliser les étapes selon l'une quelconque des revendications 1 à 8 lorsque ledit produit de programme est exécuté sur un ordinateur.

11. Unité de commande (101) configurée pour réaliser les étapes du procédé selon l'une quelconque des revendications 1 à 8.

12. Véhicule (VS) comprenant une unité de commande (101) selon la revendication 11.
